# EUROPÄISCHE PATENTSCHRIFT

(11) **EP 1 171 215 B1**
(45) Veröffentlichungstag und Bekanntmachung des Hinweises auf die Patenterteilung: **04.06.2003**
(21) Anmeldenummer: 00929366.3
(22) Anmeldetag: 17.04.2000
(51) Int. Cl.: B01D 29/15, B01D 29/23, B01D 29/96, B01D 35/30

(54) **FILTERVORRICHTUNG MIT EINEM LÖSBAREN FILTERGEHÄUSE**
FILTERING DEVICE COMPRISING A DETACHABLE FILTER HOUSING
DISPOSITIF FILTRANT MUNI D'UN CARTER DE FILTRE AMOVIBLE

(30) Priorität: 19.04.1999 DE 19917567
(43) Veröffentlichungstag der Anmeldung: 16.01.2002
(73) Patentinhaber: BRUENINGHAUS HYDROMATIK GMBH, 89275 Elchingen (DE); K. & H. Eppensteiner GmbH & Co. KG, 68775 Ketsch (DE)
(72) Erfinder: SEIFERT, Bodo-Siegfried, D-89075 Ulm (DE); STETTER, Rudolf, D-88481 Balzheim (DE); EPPENSTEINER, Ulrich, D-74889 Sinsheim (DE); SCHÄFER, Thomas, D-68775 Ketsch (DE)
(74) Vertreter: Körfer, Thomas
(86) Internationale Anmeldenummer: EP0003463
(87) Internationale Veröffentlichungsnummer: WO00062893

(56) Entgegenhaltungen:
- GB-A- 2 307 422
- US-A- 3 040 894
- US-A- 4 316 801
- US-A- 4 465 595
- US-A- 5 230 795
- US-A- 5 688 396

## Beschreibung

Die Erfindung bezieht sich auf eine Filtervorrichtung nach dem Oberbegriff des Anspruchs 1.

Filtervorrichtungen mit der Bauart des Oberbegriffs des Anspruchs 1 sind aus der Praxis bekannt und z. B. in der US 4,316,801 A oder US 4,465,595 A beschrieben.

Bei dieser bekannten Bauweise besteht die Filtervorrichtung aus drei Hauptteilen, nämlich einem Basisteil, einem kappenförmigen und insbesondere hohlzylindrischen Filtergehäuse, das mit seinem freien Rand lösbar mit dem Basisteil verbunden ist, und einem rohrförmigen Filter, das im Filtergehäuse angeordnet und an seiner einen Stirnseite mit dem Basisteil verbunden ist und an seiner anderen Stirnseite im Grundbereich des Filtergehäuses an diesem abgestützt ist. Die Strömung des zu filternden Mediums kann im rohrförmigen Filter radial nach innen oder radial nach außen gerichtet sein. Hierzu sind im Basisteil zwei Durchflußkanäle vorgesehen, die mit weiterführenden Leitungen verbindbar sind und von denen der eine mit dem Innenraum des Filters verbunden ist, während der andere mit dem Freiraum zwischen dem Filter und der Umfangswand des Filtergehäuses verbunden ist. Außerdem ist eine Fixiervorrichtung vorgesehen, um das Filter an einem im Grundbereich des Filters angeordneten Anschlag zu halten.

Bei dieser Lösung bildet das Filtergehäuse und das Filter eine Bewegungseinheit. Hierdurch ist gewährleistet, daß beim Entfernen des Filtergehäuses vom Basisteil das Filter in Anlage mit dem Filtergehäuse verbleibt und deshalb das Filtergehäuse nur eine kleine Strecke axial vom Basisteil entfernt werden muß, nämlich so weit, daß das Filter außer Kontakt mit dem Basisteil gerät. Dann können das Filtergehäuse und das Filter als Bewegungseinheit seitlich entfernt werden. Infolgedessen ist es auch bei einem in axialer Richtung entsprechend kurzen Montage- bzw. Demontageraum möglich, das Filtergehäuse zu montieren bzw. zu demontieren.

In der Umgebung des Filtergehäuses ist ein verhältnismäßig großer Montageraum bzw. Freiraum erforderlich, der an denkbaren Einsatzorten der Filtervorrichtung nicht immer vorhanden ist. Dies ist insbesondere bei hydraulischen Antriebs- oder Getriebeaggregaten und bei Baumaschinen, wie Bagger, Lader, Erdschieber, Bohrgeräte, Kränen und solchen Maschinen der Fall, bei denen eine kompakte Bauweise angestrebt wird.

Der Erfindung liegt die Aufgabe zugrunde, eine Filtervorrichtung der eingangs angegebenen Art so auszugestalten, daß eine Montage bzw. Demontage der Filtervorrichtung auch bei engen Raumverhältnissen in der Umgebung möglich ist.

Diese Aufgabe wird durch die Merkmale des Anspruchs 1 gelöst. Vorteilhafte Weiterbildungen der Filtervorrichtung sind in den Unteransprüchen beschrieben.

Bei der erfindungsgemäßen Filtervorrichtung weist das Basisteil (2) an einer Seite eine Basiswand (38) mit einer seitlichen Anbaufläche (36) auf, aus der der erste Durchflußkanal (33) und der zweite Durchflußkanal (34) austreten, wobei in der Basiswand (38) Schraubenlöcher (37) angeordnet sind.

Die Fixierung des Filters kann im Grundbereich des Filtergehäuses erfolgen oder es kann eine Beaufschlagung des Filters in Richtung auf den Grundbereich des Filtergehäuses auf verschiedene Weise erfolgen. Eine vorteilhafte Ausgestaltung besteht darin, das Filter durch die Kraft einer Feder axial gegen den Grundbereich vorzuspannen, wobei die Feder z. B. zwischen dem Basisteil und dem ihm zugewandten Stirnende des Filters angeordnet sein kann. Eine andere Möglichkeit besteht darin, eine feste Verbindung zwischen dem Filter und dem Filtergehäuse vorzusehen, die z. B. durch eine Klemmvorrichtung oder eine Verschraubung gebildet sein kann.

In den Unteransprüchen sind Merkmalen enthalten, die zu einfachen, kleinen und kostengünstig herstellbaren Bauweisen führen, die Montage bzw. Demontage vereinfachen und ferner eine vorteilhafte Strömungs- und/oder Filterfunktion gewährleisten.

Nachfolgend werden die Erfindung und weitere durch, sie erzielbare Vorteile anhand von bevorzugten Ausführungsbeispielen und Zeichnungen näher erläutert. Es zeigt:
- Fig. 1: eine erfindungsgemäße Filtervorrichtung im Längsschnitt; und
- Fig. 2: die Filtervorrichtung nach Fig. 1 in abgewandelter Ausgestaltung.

Die Hauptteile der allgemein mit 1 bezeichneten Filtervorrichtung sind ein Basisteil 2, mit dem die Filtervorrichtung 1 an einem z. B. durch ein Maschinen- bzw. Geräteteil gebildeten Träger anbaubar ist, ein kappenförmiges und im Querschnitt vorzugsweise rundes Filtergehäuse 3, das im Bereich seines freien Randes 4 durch eine lösbare Verbindungsvorrichtung 5 mit dem Basisteil 2 verbunden ist, ein hohlzylindrisches Filter 6, das mit einem Freiraum 7 zwischen ihm und der Umfangswand 3a des Filtergehäuses 3 in diesem angeordnet ist und durch eine Haltevorrichtung 8 in seiner in das Filtergehäuse 3 eingesetzten Stellung am Basisteil 2 und Filtergehäuse 3 gehalten ist.

Beim vorliegenden Ausführungsbeispiel ist die Verbindungsvorrichtung 5 eine Schraubverbindung mit einem Gewindeeingriff 9 zwischen dem freien Rand 4 des Filtergehäuses 3 und dem Basisteil 2, hier einem koaxial zu der Längsmittelachse 11 des Filtergehäuses 3 vom Basisteil 2 abstehenden Rohrstutzens 12, der zweiteilig oder einteilig mit dem Basisteil 2 ausgebildet sein kann. Das Innen- und Außengewinde der Schraubverbindung kann jeweils wahlweise an dem einen oder dem anderen Teil der Verbindungsvorrichtung 5 angeordnet sein. Bei der vorliegenden Ausgestaltung weist der freie Rand 4 ein Innengewinde auf, das auf ein Außengewinde am Rohrstutzen 12 aufschraubbar ist, das im Bereich einer Rohrstutzenverjüngung angeordnet ist, wodurch sich eine das Aufschrauben durch einen Anschlag begrenzende Schulterfläche 13 ergibt, gegen die der freie Rand 4 mit seiner Stirnfläche schraubbar ist. Zur Abdichtung der Schraubverbindung kann ein Dichtungsring 9a vorgesehen sein, z. B. ein O-Ring, der vorzugsweise im Eckenbereich der Rohrstutzenverjüngung angeordnet ist.

Das Filtergehäuse 3 kann zwecks Material- und Gewichtsersparnis aus einem dünnen Blech, z. B. Metall- oder Stahlblech bestehen, daß zu seiner Stabilisierung im Bereich des freien Randes 4 mit einem Verstärkungsring 14 fest verbunden, z. B. verschweißt ist.

Das rohrförmige Filter 6 weist einen für das zu filternde Medium, insbesondere eine Flüssigkeit wie Hydrauliköl, durchlässigen Mantelkörper 15 auf, der mit beidendig angeordneten Endscheiben oder Endkappen 16a, 16b, vorzugsweise aus Blech, eine Filtereinheit bilden kann. Zur Stabilisierung des Mantelkörpers 15 kann eine perforierte Innenhülse 17 vorgesehen sein, auf der der Mantelkörper 15 sitzt, und die Teil des Mantelkörpers 15 oder Teil einer der beiden Endkappen 16a, 16b sein kann. Die Endkappen 16a, 16b können mit an ihren äußeren Rändern angeordneten Rohrstutzen 18 den Mantelkörper 15 übergreifen. Beim vorliegenden Ausführungsbeispiel kann auch die dem Basisteil 2 nahe angeordnete Endkappe 16a einen vergleichbaren Rohrstutzen 18a aufweisen, der in den Mantelkörper 15 bzw. in die Innenhülse 17 mit Bewegungsspiel einfaßt. Die Endkappe 16a weist ein konzentrisches, insbesondere rundes, Aufnahmeloch 19 auf, mit dem es auf einem vom Basisteil 2 koaxial abstehenden Aufnahmezapfen 21 sitzt und bezüglich seiner Position im Filtergehäuse 3 zumindest im Bereich dieses Filterkörperendes zentriert ist. Zur Abdichtung des Mantelkörpers 15 bzw. der zugehörigen Endkappe 16a gegen den Aufnahmezapfen 21 kann eine Ringdichtung 22, z. B. ein O-Ring, vorgesehen sein, der zwischen diesen abzudichtenden Teilen und einer Schulterfläche 23 angeordnet sein kann. Beim vorliegenden Ausführungsbeispiel ist die Schulterfläche 23 durch eine Ringscheibe 23a gebildet, die auf dem Aufnahmezapfen 21 sitzt. Zwecks Erleichterung des Aufsteckens der so gebildeten Filtereinheit 6a auf den Aufnahmezapfen 21, weist dieser eine Einführungsfläche 24 in Form einer gerundeten oder kegelförmigen Anfasung seines freien Außenrandes auf.

Beim vorliegenden Ausführungsbeispiel wird der Aufnahmezapfen 21 durch einen koaxial vom Basisteil 2 abstehenden Zapfenträger 25a gebildet, auf dem eine Aufnahmehülse 25b sitzt, z. B. mittels einer Schraubverbindung aufgeschraubt ist, die auch die Einführungsfläche 24 aufweist.

An dem dem Basisteil 2 abgewandten Ende der Filtereinheit 6a ist eine zweite, der ersten Schulter- bzw. Anschlagfläche 23 entgegengesetzt angeordnete Schulterfläche 26 vorgesehen, an der das zugehörige Ende der Filtereinheit 6a anliegt. Beim vorliegenden Ausführungsbeispiel ist ein Positionierzapfen 27 im Grundbereich bzw. an der Bodenwand 3b des Filtergehäuses 3 vorgesehen, der nach innen absteht und in der Montagestellung an der zugehörigen Endkappe 16b anliegt, die hierzu eine Einbuchtung 28 aufweisen kann, in die der Positionierzapfen 27 einfaßt. Es ist vorteilhaft, den Positionierzapfen 27 durch einen an der Bodenwand 3b befestigten und axial abstehenden, vorzugsweise zylindrischen, Bolzen 27a zu bilden. Es ist im weiteren vorteilhaft, außenseitig am Filtergehäuse 3 ein Drehwerkzeug-Angriffselement zum Auf- und Abschrauben des Filtergehäuses 3 anzuordnen. Das Angriffselement kann an einem mittigen außenseitigen Vorsprung an der Bodenwand 3b angeordnet sein. Beim vorliegenden Ausführungsbeispiel ist das Angriffselement durch einen Innen- oder Außenmehrkant 29 gebildet, der am Kopf eines Bolzenkopfes 31 angeordnet ist, der mit seinem Schaft die Bodenwand 3b nach innen durchsetzt und den Positionszapfen 27 bildet. Der Vorsprung bzw. Bolzenkopf kann durch Schweißen an der Bodenwand 3b befestigt sein.

Die soweit beschriebene Haltevorrichtung 8 zum Halten der Filtereinheit 6a am Basisteil 2 und in der Filtervorrichtung 1 umfaßt somit die Filtereinheit 6a axial begrenzende Begrenzungs- oder Spannflächen 23, 26, die durch das Aufschrauben des Filtergehäuses 3 axial aktiviert werden, und eine Zentrierung 32 für die Filtereinheit 6a, die wenigstens an ihrem, dem Basisteil 2 zugewandten Ende oder an beiden Enden wirksam ist.

Im Funktionsbetrieb gelangt das zu filternde Medium durch zwei das Basisteil 2 durchsetzende Durchflußkanäle 33, 34 zum Filter 6, wobei der eine Durchflußkanal mit dem Freiraum zwischen dem Aufnahmezapfen 21 und dem Rohrstutzen 12 und somit auch mit dem Freiraum 7 verbunden ist und der andere Durchflußkanal 34 mit dem von der Filtereinheit 6a umgebenden Hohlraum 35 verbunden ist. Die Durchflußkanäle 33, 34 treten an ihren anderen Enden an einer ebenen Anbaufläche 36 des Basiskörpers 2 aus, die beim vorliegenden Ausführungsbeispiel bezüglich der Längsmittelachse 11 seitlich angeordnet ist und eine größere radiale Abmessung aufweist, als die übrigen Teile der Filtervorrichtung, insbesondere des Filtergehäuses 3, so daß die Filtervorrichtung 1 problemlos an einer nicht dargestellten Anbaufläche eines Gerätes oder einer Maschine oder dergleichen angebaut werden kann, in der weiterführende Kanäle für das zu filternde Medium angeordnet sind. Die Strömungsrichtung des zu filternden Mediums kann im Bereich der Filtereinheit 6a radial nach außen oder radial nach innen gerichtet sein. Zur Befestigung des Basisteils 2 an der Anbaufläche 36 können z. B. Schraubenlöcher 37 in einer die Anbaufläche 36 aufweisenden Basiswand 38 des Basisteils 2 angeordnet sein.

Der Haltevorrichtung 8 ist eine Fixiervorrichtung 39 zum Fixieren der Filtereinheit 6a am Filtergehäuse 3 zugeordnet, insbesondere zum Fixieren der Filtereinheit 6a im Grund-bzw. Bodenbereich des Filtergehäuses 3. Durch diese Fixierung ist gewährleistet, daß die Filtereinheit 6a beim Lösen des Filtergehäuses 3 mit diesem mitbewegt wird, und deshalb das Filtergehäuse 3 mit der Filtereinheit 6a z. B. in seitlicher Richtung vom Basisteil 2 entfernt werden kann, um z. B. eine Filterkontrolle durchzuführen oder die Filtereinheit 6a oder den Filterkörper auszutauschen. Es bedarf deshalb in axialer Richtung nur eines geringen, mit 41 bezeichneten Freiraums zwischen dem Filtergehäuse 3 und dem Gerät oder der Maschine, an der die Filtervorrichtung 1 angebaut werden soll. Dies gilt natürlich auch für einen Montagevorgang. Die diesbezüglichen axialen und quergerichteten Bewegungen sind mit den Doppelpfeilen 42 verdeutlicht. Vorzugsweise ist das axiale Überlappungsmaß a der Verbindungsvorrichtung 5 größer bemessen, als das axiale Überlappungsmaß b zwischen der Filtereinheit 6a und dem Aufnahmezapfen 21, so daß beim axialen Lösen die Filtereinheit 6a außer Kontakt mit dem Aufnahmezapfen 21 gerät, bevor das Filtergehäuse 3 endgültig gelöst ist und beim Montieren zunächst die Verbindungsteile der Verbindungsvorrichtung 5 in Kontakt geraten und dann die Filtereinheit 6a mit dem Aufnahmezapfen 21 in Kontakt kommt.

Beim vorliegenden Ausführungsbeispiel weist die Fixiervorrichtung 39 eine axial wirksame Feder 43 auf, z. B. eine konische Wendelfeder, die sich am Basisteil 2 abstützt und die Filtereinheit 6a in Richtung auf die Bodenwand 3b vorspannt, so daß beim Lösen des Filtergehäuses 3 die Filtereinheit 6a mit dem Filtergehäuse 3 mitbewegt wird und daran aufgrund der Federspannung verbleibt, bis die Verbindungsvorrichtung 5 gelöst ist.

Beim vorliegenden Ausführungsbeispiel beaufschlagt die Feder 43 die Ringscheibe 23a, wobei sie mittelbar über die Ringdichtung 22 gegen die Filtereinheit 6a wirkt. Die Feder 43 ist vorzugsweise am Basisteil 2 fixiert, so daß sie nach dem Lösen des Filtergehäuses 3 am Basisteil 2 verbleibt. Dies kann dadurch erfolgen, daß das dem Basisteil 2 zugewandte Ende der Feder 43 am Basisteil 2 fixiert ist, z. B. durch die Aufnahmehülse 25b, deren dem Basisteil 2 zugewandtes Ende die kleinste Wendel der Feder 43 hintergreift. Umgekehrt kann die Feder 43 auch an der Filtereinheit 6a befestigt sein.

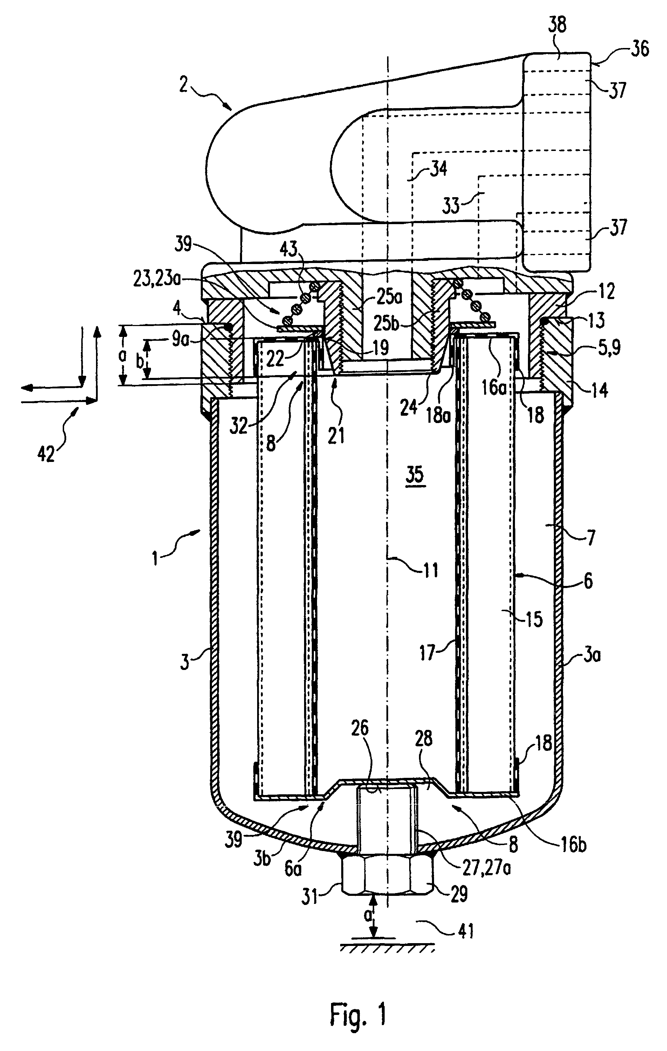

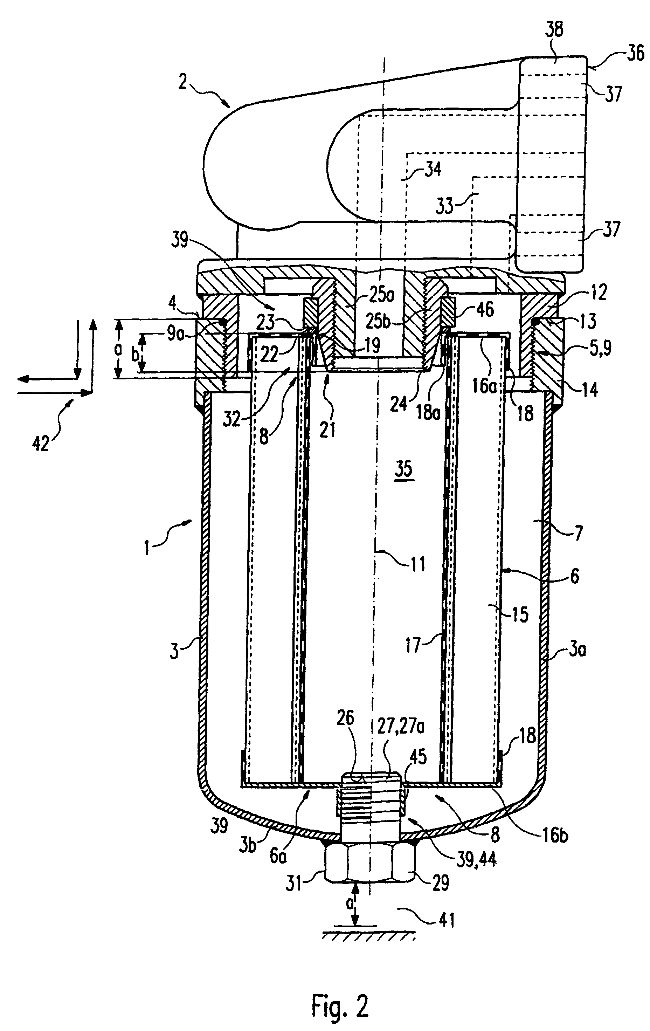

Beim Ausführungsbeispiel nach Fig. 2, bei der gleiche oder vergleichbare Teile mit gleichen Bezugszeichen versehen sind, weist die Fixiervorrichtung 39 eine feste jedoch vorzugsweise lösbare Verbindung zwischen der Filtereinheit 6a und dem Filtergehäuse 3 auf, wobei diese Verbindung insbesondere im Grundbereich des Filtergehäuses 3 angeordnet ist. Beim vorliegenden Ausführungsbeispiel ist eine Schraubverbindung 44 zwischen der Filtereinheit 6a und dem Grundbereich des Filtergehäuses vorgesehen. Die Schraubverbindung 44 kann durch ein Innengewinde in einer endseitigen Buchse 45 der zugehörigen Endkappe 16b und ein Außengewinde auf dem Positionierzapfen 27 gebildet sein, wobei die Filtereinheit 6a mit der Buchse 45 auf den Positionierzapfen 27 aufgeschraubt ist. Aufgrund der festen Verbindung zwischen dem Filtergehäuse 3 und der Filtereinheit 6a kann die beim Ausführungsbeispiel nach Fig. 1 vorhandene Feder 43 entfallen. Dies gilt auch für die Ringscheibe 23a, die die Schulterfläche 23 für die Ringdichtung 22 bildet. Eine solche Schulterfläche 23 könnte am Aufnahmezapfen 21 bzw. an der Aufnahmehülse 25 angeordnet sein. Beim vorliegenden Ausführungsbeispiel wird die Anlag-bzw. Schulterfläche 23 durch die zugehörige Stirnfläche einer Distanzhülse 46 gebildet, die auf dem Aufnahmezapfen 21 bzw. auf der Aufnahmehülse 25b sitzt und an einer Schulterfläche der Aufnahmehülse 25b oder direkt am Basisteil 2 abgestützt sein kann.

## Patentansprüche

1. Filtervorrichtung (1) mit einem rohrförmigen Filter (6), das an seinem einen Ende an einem Basisteil (2) und an seinem anderen Ende an einem kappenförmigen Filtergehäuse (3) abgestützt ist, das das Filter (6) mit einem radialen Freiraum (7) übergreift und an seinem Rand (4) lösbar mit dem Basisteil (2) verbunden ist, wobei das Basisteil (2) einen ersten Durchflußkanal (33) aufweist, der mit dem Freiraum (7) verbunden ist und einen zweiten Durchflußkanal (34) aufweist, der mit einem Hohlraum (35) des Filters (6) verbunden ist, und wobei
eine Fixiervorrichtung (39) vorgesehen ist, um das Filter (6) am Filtergehäuse (3) zu arretieren oder das Filter (6) gegen das Filtergehäuse (3) in Anlage zu halten,
**dadurch gekennzeichnet,**
**daß** das Basisteil (2) an einer Seite eine Basiswand (38) mit einer seitlichen Anbaufläche (36) aufweist, aus der der erste Durchflußkanal (33) und der zweite Durchflußkanal (34) austreten, wobei in der Basiswand (38) Schraubenlöcher (37) angeordnet sind.

2. Filtervorrichtung nach Anspruch 1,
**dadurch gekennzeichnet,**
**daß** die Fixiervorrichtung (39) eine Feder (43) aufweist, die das Filter (6) in Richtung auf den Grund des Filtergehäuses (3) vorspannt.

3. Filtervorrichtung nach Anspruch 2,
**dadurch gekennzeichnet,**
**daß** die Feder (43) am dem Baisteil (2) zugewandten Ende des Filters (6) angreift.

4. Filtervorrichtung nach Anspruch 3,
**dadurch gekennzeichnet,**
**daß** die Feder (43) zwischen dem Basisteil (2) und dem ihm zugewandten Ende des Filters (6) angeordnet ist.

5. Filtervorrichtung nach einem der Ansprüche 2 bis 4,
**dadurch gekennzeichnet,**
**daß** die Feder (43) eine Wendelfeder ist.

6. Filtervorrichtung nach einem der Ansprüche 2 bis 5,
**dadurch gekennzeichnet,**
**daß** das dem Basisteil (2) zugewandte Ende des Filters (6) auf einem vom Basisteil (2) abstehenden Aufnahmezapfen (21) sitzt.

7. Filtervorrichtung nach Anspruch 6,
**dadurch gekennzeichnet,**
**daß** die Feder (43) auf dem Aufnahmezapfen (21) angeordnet ist.

8. Filtervorrichtung nach Anspruch 6 oder 7,
**dadurch gekennzeichnet,**
**daß** zwischen dem Aufnahmezapfen (21) und dem Filter (6) eine Ringdichtung (22), insbesondere ein O-Ring, angeordnet ist.

9. Filtervorrichtung nach Anspruch 8,
**dadurch gekennzeichnet,**
**daß** die Ringdichtung (22) zwischen dem Filter (6) und einer Ringscheibe (23a) angeordnet ist, wobei die Feder (43) die Ringscheibe (23a) gegen das Filter (6) vorspannt.

10. Filtervorrichtung nach einem der Ansprüche 2 bis 9,
**dadurch gekennzeichnet,**
**daß** die Feder (43) das Filter (6) gegen eine Anschlagfläche (26) am Filtergehäuse (3) vorspannt, die vorzugsweise im Grundbereich des Filtergehäuses (3) angeordnet ist.

11. Filtervorrichtung nach einem der vorherigen Ansprüche,
**dadurch gekennzeichnet,**
**daß** auf dem dem Basisteil (2) abgewandten Ende des Filters (6) eine Endkappe (16b) sitzt, mit der das Filter (6) mittelbar oder unmittelbar am Filtergehäuse (3) in dessen Grundbereich anliegt.

12. Filtervorrichtung nach Anspruch 11,
**dadurch gekennzeichnet,**
**daß** die Endkappe (16b) an der Bodenwand (3b) des Filtergehäuses (3) oder an einem von der Bodenwand (3b) zentral abstehenden Zapfen (27) anliegt.

13. Filtervorrichtung nach Anspruch 12,
**dadurch gekennzeichnet,**
**daß** das Filter (6) am Zapfen (27) zentriert ist.

14. Filtervorrichtung nach Anspruch 13,
**dadurch gekennzeichnet,**
**daß** der Zapfen (27) in eine Ausnehmung in der Endkappe (16b) einfaßt.

15. Filtervorrichtung nach Anspruch 1,
**dadurch gekennzeichnet,**
**daß** die Fixiervorrichtung (39) durch eine lösbare Verbindung zwischen dem Filter (6) und dem Filtergehäuse (3) gebildet ist.

16. Filtervorrichtung nach Anspruch 15,
**dadurch gekennzeichnet,**
**daß** die lösbare Verbindung eine Schraubverbindung ist.

17. Filtervorrichtung nach Anspruch 1, 15 oder 16,
**dadurch gekennzeichnet,**
**daß** die Fixiervorrichtung (39) im Grundbereich des Filtergehäuses (3) angeordnet ist.

18. Filtervorrichtung nach Anspruch 17,
**dadurch gekennzeichnet,**
**daß** auf dem der Bodenwand (3a) des Filtergehäuses (3) zugewandten Ende des Filters (6) eine Endkappe (16b) sitzt und die Fixiervorrichtung (39) zwischen der Endkappe (16b) und einem von der Bodenwand (3b) abstehenden Zapfen (27) ausgebildet ist.

19. Filtervorrichtung nach Anspruch 18,
**dadurch gekennzeichnet,**
**daß** der Zapfen (27) mit der Endkappe (16b) verschraubt ist, insbesondere mit einer an der Endkappe (16b) angeordneten Buchse (45).

20. Filtervorrichtung nach einem der vorherigen Ansprüche,
**dadurch gekennzeichnet,**
**daß** das Filtergehäuse (3) durch eine Schraubverbindung (9) mit dem Basisteil (2) verbunden ist und außen am Filtergehäuse (3) ein Angriffselement (31) für ein Drehwerkzeug vorgesehen ist.

21. Filtervorrichtung nach den Anspruchen 19 und 20,
**dadurch gekennzeichnet,**
**daß** der Zapfen (27) die Bodenwand (3b) des Filtergehäuses (3) in einem Loch drehfest durchsetzt und das Angriffselement (31) von außen zugänglich am Zapfen (27) angeordnet und vorzugsweise durch einen Innen- oder Außenmehrkant (29) gebildet ist.

## Claims

1. A filter assembly (1) comprising a tubular filter (6) supported at one end on a base part (2) and at the other end on a cap-like filter housing (3) which extends around the filter (6) to form a radial chamber (7) and is detachably connected by its edge (4) to the base part (2), the base part (2) having a first through-flow channel (33) which is connected to the chamber (7) and a second through-flow channel (34) which is connected to a cavity (35) of the filter (6) and a fixing device (39) being provided to lock the filter (6) to the filter housing (3) or to retain the filter (6) in engagement against the filter housing (3), **characterised in that** the base part (2) has on one side a base wall (38) with a lateral attachment face (36) from which the first through-flow channel (33) and the second through-flow channel (34) emerge, threaded holes (37) being arranged in the base wall (38).

2. Filter assembly according to Claim 1, **characterised in that** the fixing device (39) includes a spring (43) which preloads the filter (6) towards the bottom of the filter housing (3).

3. Filter assembly according to Claim 2, **characterised in that** the spring (43) bears against the end of the filter (6) facing towards the base part (2).

4. Filter assembly according to Claim 3, **characterised in that** the spring (43) is arranged between the base part (2) and the end of the filter (6) facing towards said base part (2).

5. Filter assembly according to any one of claims 2 to 4, **characterised in that** the spring (43) is a helical spring.

6. Filter arrangement according to any one of claims 2 to 5, **characterised in that** the end of the filter (6) facing towards the base part (2) is seated on a receiving spigot (21) projecting from the base part (2).

7. Filter assembly according to Claim 6, **characterised in that** the spring (43) is arranged on the receiving spigot (21).

8. Filter assembly according to Claim 6 or 7, **characterised in that** an annular seal (22), in particular an O-ring, is arranged between the receiving spigot (21) and the filter (6).

9. Filter assembly according to Claim 8, **characterised in that** the annular seal (22) is arranged between the filter (6) and a washer (23a), the spring (43) preloading the washer (23a) against the filter (6).

10. Filter assembly according to any one of claims 2 to 9, **characterised in that** the spring (43) preloads the filter (6) against a stop face (26) on the filter housing (3), which stop face (26) is preferably arranged in the bottom area of the filter housing (3).

11. Filter assembly according to any one of the preceding claims, **characterised in that** an end cap (16b) is mounted on the end of the filter (6) facing away from the base part (2), with which end cap (16b) the filter (6) bears directly or indirectly against the filter housing (3) in the bottom area of same.

12. Filter assembly according to Claim 11, **characterised in that** the end cap (16b) fits against the bottom wall (3b) of the filter housing (3) or against a spigot (27) projecting centrally from the bottom wall (3b).

13. Filter assembly according to Claim 12, **characterised in that** the filter (6) is centred by the spigot (27).

14. Filter assembly according to Claim 13, **characterised in that** the spigot (27) engages in an aperture in the end cap (16b).

15. Filter assembly according to Claim 1, **characterised in that** the fixing device (39) is formed by a detachable connection between the filter (6) and the filter housing (3).

16. Filter assembly according to Claim 15, **characterised in that** the detachable connection is a screw connection.

17. Filter assembly according to Claim 1, 15 or 16, **characterised in that** the fixing device (39) is arranged in the bottom area of the filter housing (3).

18. Filter assembly according to Claim 17, **characterised in that** an end cap (16b) is seated on the end of the filter (6) facing towards the bottom wall (3a) of the filter housing (3) and the fixing device (39) is formed between the end cap (16b) and a spigot (27) projecting from said bottom wall (3b).

19. Filter assembly according to Claim 18, **characterised in that** the spigot (27) is screwed to the end cap (16b), in particular by means of a bush (45) arranged on the end cap (16b).

20. Filter assembly according to any one of the preceding claims, **characterised in that** the filter housing (3) is connected to the base part (2) by a screw connection (9) and an engagement element (31) for a rotary tool is provided on the outside of the filter housing (3).

21. Filter assembly according to claims 19 and 20, **characterised in that** the spigot (27) passes non-rotatably through a hole in the bottom wall (3b) of the filter housing (3) and the engagement element (31) is arranged accessibly from the outside on the spigot (27) and is preferably formed by a head or socket of polygonal cross-section (29).

## Revendications

1. Dispositif filtrant (1) comportant un filtre tubulaire (6) en appui par l'une de ses extrémités sur une pièce de base (2) et par son autre extrémité sur un carter de filtre (3) en forme de capuchon qui coiffe le filtre (6) avec un intervalle libre radial (7) et qui est relié à son bord (4) de façon détachable à la pièce de base (2), la pièce de base (2) présentant un premier canal d'écoulement (33) qui est relié à l'intervalle libre (7) et un deuxième canal d'écoulement (34) qui est relié à une cavité (35) du filtre (6),
dans lequel est prévu un dispositif de fixation (39) pour arrêter le filtre (6) sur le carter de filtre (3) ou pour maintenir le filtre (6) en appui contre le carter de filtre (3),
**caractérisé en ce que**
la pièce de base (2) comprend sur un côté une paroi de base (38) avec une surface de montage latérale (36) hors de laquelle sortent le premier canal d'écoulement (33) et le deuxième canal d'écoulement (34), des trous à vis (37) étant ménagés dans la paroi de base (38).

2. Dispositif filtrant selon la revendication 1, **caractérisé en ce que** le dispositif de fixation (39) comprend un ressort (43) qui précontraint le filtre (6) en direction du fond du carter de filtre (3).

3. Dispositif filtrant selon la revendication 2, **caractérisé en ce que** le ressort (43) attaque l'extrémité du filtre (6) tournée vers la pièce de base (2).

4. Dispositif filtrant selon la revendication 3, **caractérisé en ce que** le ressort (43) est agencé entre la pièce de base (2) et l'extrémité du filtre (6) tournée vers ladite pièce.

5. Dispositif filtrant selon l'une des revendications 2 à 4, **caractérisé en ce que** le ressort (43) est un ressort spiral.

6. Dispositif filtrant selon l'une des revendications 2 à 5, **caractérisé en ce que** l'extrémité du filtre (6) tournée vers la pièce de base (2) repose sur un pion de réception (21) en saillie sur la pièce de base (2).

7. Dispositif filtrant selon la revendication 6, **caractérisé en ce que** le ressort (43) est agencé sur le pion de réception (21).

8. Dispositif filtrant selon l'une ou l'autre des revendications 6 et 7, **caractérisé en ce qu'**un joint annulaire (22), en particulier un joint torique est agencé entre le pion de réception (21) et le filtre (6).

9. Dispositif filtrant selon la revendication 8, **caractérisé en ce que** le joint annulaire (22) est agencé entre le filtre (6) et une rondelle (23a), le ressort (43) mettant sous précontrainte la rondelle (23a) contre le filtre (6).

10. Dispositif filtrant selon l'une des revendications 2 à 9, **caractérisé en ce que** le ressort (43) met sous précontrainte le filtre (6) contre une surface de butée (26) sur le carter de filtre (3), laquelle est agencée de préférence dans la zone de fond du carter de filtre (3).

11. Dispositif filtrant selon l'une des revendications précédentes, **caractérisé en ce qu'**à l'extrémité du filtre (6) détournée de la pièce de base (2) repose un capuchon d'extrémité (16b) au moyen duquel le filtre (6) s'appuie directement ou indirectement contre le carter de filtre (3) dans la zone de son fond.

12. Dispositif filtrant selon la revendication 11, **caractérisé en ce que** le capuchon d'extrémité (16b) s'appuie contre la paroi de fond (3b) du carter de filtre (3) ou contre un pion (27) en saillie au centre de la paroi de fond (3b).

13. Dispositif filtrant selon la revendication 12, **caractérisé en ce que** le filtre (6) est centré sur le pion (27).

14. Dispositif filtrant selon la revendication 13, **caractérisé en ce que** le pion (27) s'engage dans un évidement dans le capuchon d'extrémité (16b).

15. Dispositif filtrant selon la revendication 1, **caractérisé en ce que** le dispositif de fixation (39) est formé par une liaison détachable entre le filtre (6) et le carter de filtre (3).

16. Dispositif filtrant selon la revendication 15, **caractérisé en ce que** la liaison détachable est une liaison vissée.

17. Dispositif filtrant selon l'une des revendications 1, 15 ou 16, **caractérisé en ce que** le dispositif de fixation (39) est agencé dans la zone de fond du carter de filtre (3).

18. Dispositif filtrant selon la revendication 17, **caractérisé en ce qu'**un capuchon d'extrémité (16b) repose sur l'extrémité du filtre (6) tournée vers la paroi de fond (3a) du carter de filtre (3), et le dispositif de fixation (39) est réalisé entre le capuchon d'extrémité (16b) et un pion (27) en saillie de la paroi de fond (3b).

19. Dispositif filtrant selon la revendication 18, **caractérisé en ce que** le pion (27) est vissé sur le capuchon d'extrémité (16b), en particulier sur une douille (45) agencée sur le capuchon d'extrémité (16b).

20. Dispositif filtrant selon l'une des revendications précédentes, **caractérisé en ce que** le carter de filtre (3) est relié à la pièce de base (2) par une liaison vissée (9), et un élément d'attaque (31) pour un outil rotatif est prévu à l'extérieur sur le carter de filtre (3).

21. Dispositif filtrant selon les revendications 19 et 20, **caractérisé en ce que** le pion (27) traverse la paroi de fond (3b) du carter de filtre (3) solidairement en rotation dans un trou, et l'élément d'attaque (31) est agencé sur le pion (27) accessible depuis l'extérieur et est formé de préférence par une conformation polygonale en creux ou en relief (29).
